# EUROPÄISCHE PATENTANMELDUNG

(11) **EP 1 457 848 A2**
(43) Veröffentlichungstag der Anmeldung: **15.09.2004**
(21) Anmeldenummer: 04002262.6
(22) Anmeldetag: 03.02.2004
(51) Int. Cl.: G05B 19/05

(54) **Speicherprogrammierbare Steuerung mit PIC-Mikrocontroller**

(30) Priorität: 13.03.2003 DE 10310914
(71) Anmelder: Forschungszentrum Karlsruhe GmbH, 76133 Karlsruhe (DE)
(72) Erfinder: Habermann, Bernd, 75015 Bretten (DE); Fischer, Sven, 76351 Linkenheim-Hochstetten (DE); Göhler, Christian, 76473 Iffezheim (DE)

(57) **Zusammenfassung**

Es wird eine speicherprogrammierbare Steuerung, SPS, vorgestellt, die in ihrem technischen Aufbau jederzeit leicht zugänglich ist und deren wesentliche Komponenten, wie Microcontroller, Treiberbausteine, Widerstandsnetzwerke, einfach aus ihren auf der Leiterplatine angeordneten Sockeln entnehmbar oder darin einsteckbar sind. Der Microcontroller ist jederzeit umprogrammierbar. Die gesteckten Treiberbausteine bestimmen die Zahl digitaler Ausgänge, die gesteckten Widerstandsnetzwerke die digitalen Eingänge, die digitalen Ein- und Ausgänge sind somit beliebig festlegbar. Die konfektionierte SPS wird für den technischen Betrieb, die als Bausatz vorliegende SPS wird für didaktische Zwecke eingesetzt.

## Beschreibung

Die Erfindung betrifft eine speicherprogrammierbare Steuerung. Sie wird in der Technikwelt meist kurz als SPS bezeichnet.

Speicherprogrammierbare Steuerungen finden in der Technik dort Anwendung, wo irgendwelche Abläufe/Maschinen auf eine immer gleiche Art gesteuert werden und diese Steuerung nicht hochkomplex ist. Da es sich um eine Maschinensteuerung handelt, ist die Sprache eine einfache aber schnelle und zuverlässige Befehlssprache mit hoher Störsicherheit.

Speicherprogrammierbare Steuerungen sind zu diesem Zweck schon lange Bestandteil in der elektrischen Anlagentechnik. SPSn sind aus elektronischen Bauteilen/-gruppen aufgebaut und haben im Betrieb, falls gefordert, schon leistungsstärkere Signale anstehen, mit denen leistungsforderndes Gerät bei Bedarf betätigt werden kann. Bekannt und auf dem Markt erhältlich ist beispielsweise das Siemens-Produkt LOGO. Dieses LOGO-Modul hat standardmäßige 8 Eingänge und 4 Ausgänge und kann über Zusatzbausteine/Module auf höchstens 24 digitale Eingänge, 8 analoge Eingänge und 16 digitale Ausgänge erweitert werden (LOGO! ..0BA3 Hardwareaufbau, Folie 3, SM8 Oktober 2001; S. Brodte; Nbg-M;3007).

Bei handelsüblichen SPSn ist man in den Funktionsmöglichkeiten beschränkt und festgelegt. Diese Beschränkung führte zu der Aufgabe, die der Erfindung zugrunde liegt, nämlich eine flexiblere SPS bereitzustellen, bei der nach Bedarf die Ein- und Ausgänge je nach Einsatz frei/wahlweise festgelegt werden können. Die SPS soll mit wenig Aufwand für unterschiedliche Einsätze modifizierbar sein, sie soll leicht zu warten oder zu reparieren sein und darüber hinaus als Lehr-/Übungsmittel verwendet werden können.

Die Aufgabe wird durch eine SPS gemäß den kennzeichnenden Merkmalen des Anspruch 1 gelöst.

Der Microcontroller ist auf einen für ihn vorgesehenen, auf der Platine eingelöteten Sockel steckbar. Kann also leicht gezogen werden und über einen Brenner an eine Programmiereinrichtung angedockt werden, wo ihm nach Bedarf/Belieben immer wieder ein neues/modifiziertes Programm reversibel eingebrannt werden kann.

Die digitalen Anschlüsse der SPS können ebenfalls nach Bedarf in ihrer Anzahl als Eingänge festgelegt werden. Auf der Platine der SPS sind Sockel für die digitalen Ein- und Ausgänge zusammen vorhanden. Je nach der gewünschten Anzahl digitaler Eingänge wird in wenigsten einen dieser ein Widerstandsnetzwerk gesteckt. Für die digitalen Ausgänge wird entsprechend mindestens eine Treiberstufe in einen solchen Sockel gesteckt. Widerstandsnetzwerke und Treiberstufen haben gleiche Sockelgeometrie, sind also bei Bedarf bzw. neuer Maschinensteuerung austauschbar bzw. belegbar.

Die digitalen Anschlüsse sind wiederum bei Bedarf entweder wahlweise einzeln als Eingangs- oder Ausgangsanschluss oder in einem 2n- oder 2ⁿ-Raster als Eingangs- oder Ausgangsanschluss festlegbar. n ist eine festlegbare, natürliche Zahl ≥ 1. Hiermit hat man eine große, willkürliche Belegungsfreiheit. In der SPS-Technik ist häufig ein 8-Bit-Raster dafür üblich, darüber oder darunter ist meist schon eine Sonderbelegung, die aber durch diese Belegungsfreiheit ohne Aufwand schnell einzurichten ist.

Die Versorgungsspannung der SPS liegt in dem üblichen Band zwischen 2,4 V und 35 V und ist dort frei wählbar. Für Versorgungsspannungen zwischen 2,4 V und 6 V ist Batterie-/Solarbetrieb möglich, nur muss dann der in der SPS vorhandene Spannungsregler überbrückt werden, also unwirksam gemacht werden. Dies kommt für kleine Anwendungen in Betracht, wie z.B. eine LED-Temperaturanzeige. Allerdings müssen dann einige Bauteile in der SPS weggelassen werden, welche die Spannung herabsetzen, wie z.B. eine als Polungsschutz vorgesehene Diode, LEDn zur Anzeige der aktiven Ein- und Ausgänge und die dazugehörigen Vorwiderstände, ein Spannungsregler, der die Betriebsspannung für den PIC-Mikrocontroller auf 5 V herunterregelt und schließlich Treiberbausteine, die durch Brücken ersetzt werden müssen. Das Layout der Platine bleibt bei all diesen Maßnahmen jedoch unverändert.

Bei nicht neutralisiertem also wirksamem Steckernetzteil kann mit einem spannungsentsprechenden Steckernetzteil jede Betriebsspannung daraus ausgewählt werden. Übliche Betriebsspannungen sind 6, 9, 12 und 24 V.

In den Unteransprüchen 2 bis 8 sind weitere vorteilhafte Eigenschaften für den flexiblen Umgang mit der SPS aufgeführt. In einem Ausführungsbeispiel besteht die SPS aus einem Microcontroller, der eine graphische Programmieroberfläche hat (Anspruch 2). Dieser benötigt zum Einbrennen einer programmierten und getesteten Steuerung eine Programmierspannung von 13 V (Anspruch 3). Einem solchen Microcontroller muss in einem externen Brenner das Steuerprogramm eingebrannt werden.

In einem andern Ausführungsbeispiel besteht die SPS aus einem Microcontroller, der über eine Programmierhochsprache programmierbar ist (Anspruch 4). Die Programmierspannung ist dann 5 V (Anspruch 5). In diesem Fall könnte der Brenner sogar in der SPS integriert sein (Anspruch 6).

An die SPS kann jederzeit ein 5 V-LED-Display mit bis zu 4 Zeilen zum Darstellen von bis zu 20 Zeichen anschlossen werden, damit wird dann ständig eine visuelle Information über den aktuellen Zustand der SPS dargestellt (Anspruch 7).

Für die gewerbliche Nutzung ist die mit Leiterbahnen versehene Platine mit Klemmen, Sockeln, diskreten und nicht modifizierbaren Bauteilen rasch komplettiert. Die für die Maschinensteuerung maßgebenden Bauteile, wie Microcontroller, Widerstandsnetzwerke bzw. Treiberstufen, sind leicht zu stecken bzw. zu entnehmen. Für eine andersartige Maschinesteuerung ist also kein neuer SPS-Modul notwendig, sondern es muss lediglich den Mikrocontroller umprogrammiert, bzw. ihm eine neue Maschinensteuerung eingeprägt/-gebrannt werden. Das kann mit einer Programmiereinrichtung und einem passenden Brenner nahezu beliebig oft vorgenommen werden.

Im Bereich der Ausbildung, des Trainings von Auszubildenden oder Fachkräften ist die SPS als Bausatz oder für den technischen Einsatz geeignet, da mit ihr als Bausatz der Aufbau gegenständlich erläutert und die Wartung bzw. Fehlersuche sehr leicht zugänglich geübt/vorgenommen (Anspruch 8) oder sie voll konfektioniert technisch verwendet werden kann.

Die Erfindung wird anhand der Zeichnung näher erläutert. Die Zeichnung besteht aus den Figuren 1 bis 3 und zeigt im einzelnen:
Figur 1 Platine und Belegung der SPS mit 32 Ein-/Ausgängen,
Figur 2 Beispiel der graphischen Programmerstellung mit Parsic,
Figur 3 Ablauf der Programmierung/Umprogrammierung einer SPS.

Der Mikrocontroller ist ein sehr hoch integrierter Schaltkreis, in den die ganz spezifische, zuvor an einem PC beispielsweise entwickelte Maschinensteuerung eingebrannt wird. Hierzu wird der Brenner an den PC angeschlossen, der Microcontroller in den Sockel im Brenner eingesteckt und das Programm mit der geeigneten Brennspannung eingebrannt/-geprägt.

Für das Ausführungsbeispiel wurden unter vielen Möglichen zunächst zwei Micocontroller-Typen in die engere Auswahl gezogen, der Typ PIC16F877 der Firma Microchip (PIC = Proximity Instrumentation Control) und der Typ 90S8535 der Firma Atmel. Ausgewählt wurde schließlich wegen der graphischen Programmieroberfläche der erste Typ, PIC16F877. Dieser Typ ist 40-polig und hat die technischen Daten: 8k Flash, 368 Byte RAM und eine Taktfrequenz von 20 MHz.

Er besitzt 32 Ein- oder Ausgänge, davon sind 8 analog. Er benötigt allerdings eine Programmierspannung von 13 V, und damit muss er stets in einem externen Brenner gebrannt werden.

Der Vollständigkeit halber: der Chip von Atmel 90 S 85 35 ist ebenfalls 40-polig und hat die technischen Daten: 8k Flash, 512 Byte RAM und eine Taktfrequenz von 8 MHz.

Die Taktfrequenz von 8MHz ist im Gegensatz zum PIC16F877 mit 20 MHz kein Nachteil, da die Datenverarbeitung intern anders abläuft. Der Atmel-Chip besitzt ebenfalls 32 Ein- oder Ausgänge, davon sind 8 analog. Die Programmierung einerseits wird in einer Programmierhochsprache durchgeführt, andrerseits wird darum eine Programmierspannung von nur 5V benötigt, kann oder könnte also mit einem in der SPS integriertem Brenner gebrannt werden.

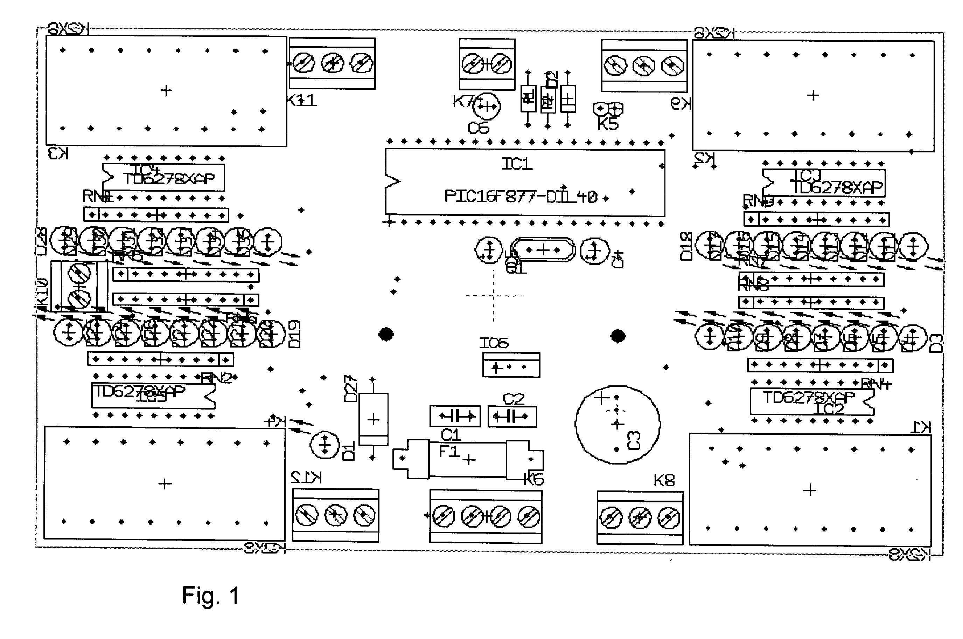

Fürs erste Ausführungsbeispiel fiel die Entscheidung auf den PIC16F877 wegen der schon erwähnten graphischen Programmierung, die leicht und einprägsam ausgeführt werden kann und damit für Lehr- und Übungszwecke sehr geeignet ist. Figur 1 zeigt die Baukomponenten-/Bauelementebelegung der leicht und einfach zugänglichen Leiterplatine der SPS. Die Lage der wesentlichen Baukomponenten bzw. ihrer Sockel auf der Leiterplatine der SPS wird im folgenden kurz erklärt:

Unter anderem sitzen in den vier Eckbereichen je eine Anschlussklemmleiste K1, K2, K3, K4 mit je 2 x 8 digitalen Anschlussmöglichkeiten. Neben jeder dieser vier Klemmleisten sitzt eine 3-polige Klemmleiste, die Codierungsklemmleiste K6, K8, K11, K12, über die durch entsprechende Brückung das Vorzeichen an der zugehörigen Anschlussklemmleiste eingerichtet wird. Hier wären es insgesamt 4 x 16 digitale Ausgänge, weil im zugehörigen, auf der Leiterplatine innen liegenden Sockel je ein steckbarer Treiber-IC2 - IC5 des Typs TD6278XAP angedeutet ist. Für digitale Eingänge müsste, wie oben erläutert, nach Bedarf in einem oder in allen diesen Sockeln ein steckbares Widerstandsnetzwerk mit gleicher Pin-Geometrie wie an den Treibern gesteckt sein. Die SPS ist also mit ihrer Leiterplatine beispielsweise für 32 digitale Ein-/Ausgänge vorgesehen.

Am unteren Bildrand der Figur 1 sitzt zwischen den beiden Anschlussklemmleisten K1, K4, die Spannungsversorgung mit ihrer 4-poligen Anschlussklemmleiste K6, der Sicherung F1, den Glättungskondensatoren C1 und C2 sowie dem Spannungsregler IC6. Die links danebensitzende Diode D27 dient als Polungsschutz für die Betriebspannung.

Zwischen den beiden am im Bild seitlichen Rand sitzenden Klemmleisten K3, K4 und K1, K5 sitzen noch je zwei Reihen an LEDn, die den aktuellen Zustand der SPS anzeigen.

Zwischen den beiden im Bild oberen Klemmleisten sitzt die zweipolige Klemmleiste K7 für den Analogeingang.

Die Zentrale der SPS ist der steckbare Microcontroller IC1 im zentralen Bereich der Leiterplatine, hier als die Type PIC16F877-DIL40 angedeutet. Im Bild unterhalb dieses Mikrocontrollers und oberhalb der Spannungsversorgung sitzt der Taktgeber der SPS, der üblicherweise ein Quarz vorgegebener Taktfrequenz ist.

Für den didaktischen Gebrauch der SPS und ihre leichte Umprogrammierung wurde das Programm "Parsic" entwickelt, für das keine Erfahrung in der Programmierung von PIC's außer Grundkenntnisse aus der Digitaltechnik notwendig sind.
Zunächst müssen bei Parsic die technischen Daten eingegeben werden. Im Datenblatt des PIC16F877 werden die Anschlusspins, Ein- oder Ausgänge, mit RA.0 - RA.5; RB.0 - RB.7; RC.0 - RC.7; RD.0 - RD.7 und der Analogeingang mit ADC7 bezeichnet. Um den Pin RA.0 mit dem Ausgang eines UND-Gatters zu verbinden, wird mit der rechten Maustaste auf den Ausgang des UND-Gatters geklickt und gibt dann im erscheinenden Menüfeld unter "Name" RA.0 ein. Jetzt wurde RA.0 auf einen Ausgang gesetzt und Parsic wird RA.0 als Ausgang programmieren. Wenn ein Eingang benötigt wird, muss die Bezeichnung auf den Eingang eines Verknüpfungsgliedes gesetzt werden, usw..

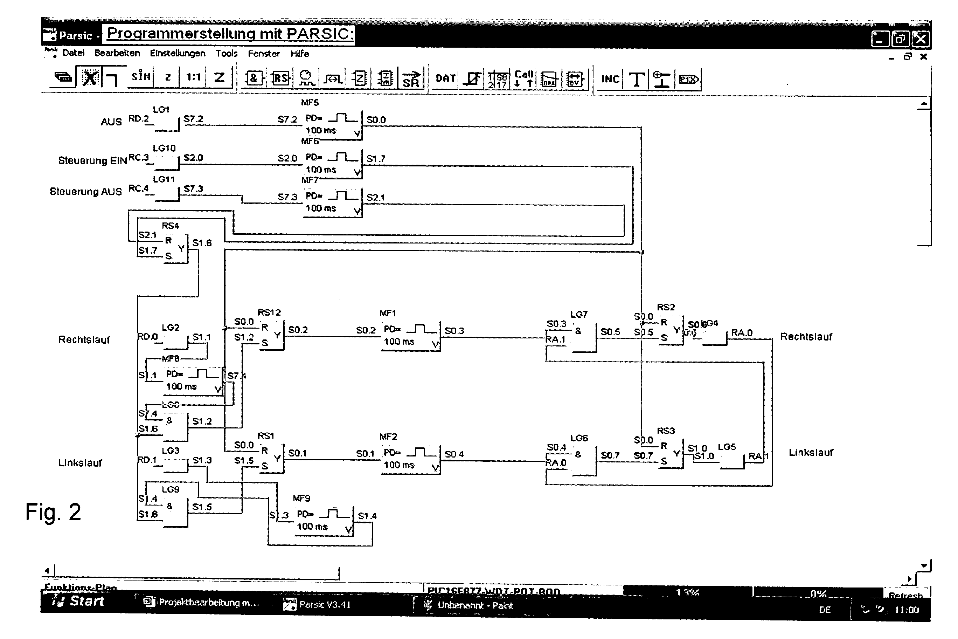

In der Menüleiste von Parsic können die benötigten Bausteine ausgewählt und miteinander verknüpft werden. Alle logischen Gatter haben bis zu 16 Eingänge. Alle Eingänge und der Ausgang können invertiert werden. Bei nur einem Eingang wird der Ausgang automatisch invertiert, so dass sich ein Inverter ergibt. Wird ein ODER-Gatter benötigt, wird ein UND-Gatter aus der Menüleiste genommen, hierzu wird es mit der rechten Maustaste angeklickt. Es wird unter UND-, ODER-, EXCLUSIV-ODER-Gatter ausgewählt und es werden die Anzahl der Eingänge festgelegt. Andere Funktionen, wie: RS-Flip-Flop, Anzugverzögerung, Abfallverzögerung, Vorwärts- und Rückwärts-Zähler, Impulsgeber, Vergleicher, usw. sind ebenfalls aus der Menüleiste abrufbar (siehe Figur 2).

Figur 2 zeigt beispielhaft die Verknüpfung logischer und elektronischer Baugruppen für den Stern-Dreieckbetrieb einer drehstrombetriebenen Einrichtung, wie einen rechts-/linkslauffähigen Drehstrommotor oder eine Dreiphasen-Heizeinrichtung, für letztere ist eine Laufrichtung unbedeutend. Am oberen Bildrand in der Figur 2 sitzen die abrufbaren Symbole, die im Bildfeld angeordnet und mit den andern leitungssymbolisierend verknüpft werden. Im Bild links sind die Eingänge RC.3, "Steuerung EIN", RC.4, "Steuerung AUS", RD.2, "AUS", und RD.0, "Rechtslauf", RD.1, "Linkslauf", rausgeführt. Die ersten drei führen über je einen Baustein LG1, LG10, LG11 an je einen Verzögerer MF5, MF6, MF7, die letzten beiden über je einen Baustein LG2, LG3 an je einen Verzögerer MF8, MF9. Diese bis dorthin führenden Eingänge werden dann weiter, teils über UND-Gatter, mit Speichern RS logisch verknüpft, bis dann rechts im Bild an den beiden Bausteinen LG4, LG5 zum ersten der Ausgang RA.0 für den "Rechtslauf" und zum zweiten der Ausgang RA.1 für den "Linkslauf" vorliegt. Mit diesem Steuerungsbeispiel wird ein Drehstrommotor stern-dreieck- und drehrichtungsumschaltbar gesteuert.

Ist dieser Steuerungsaufbau zusammengestellt und getestet, bzw. die Sollfunktion der SPS getestet, wird sie abgespeichert. Über den an den Rechner angeschlossenen Brenner, in dem der PIC-Microcontroller gesteckt ist, wird das zusammengestellte und getestete Steuerungsprogramm in denselben reversibel eingebrannt. Zur Sicherheit und Überprüfung des korrekten Brennens kann abschließend die Funktion nochmals verglichen werden.

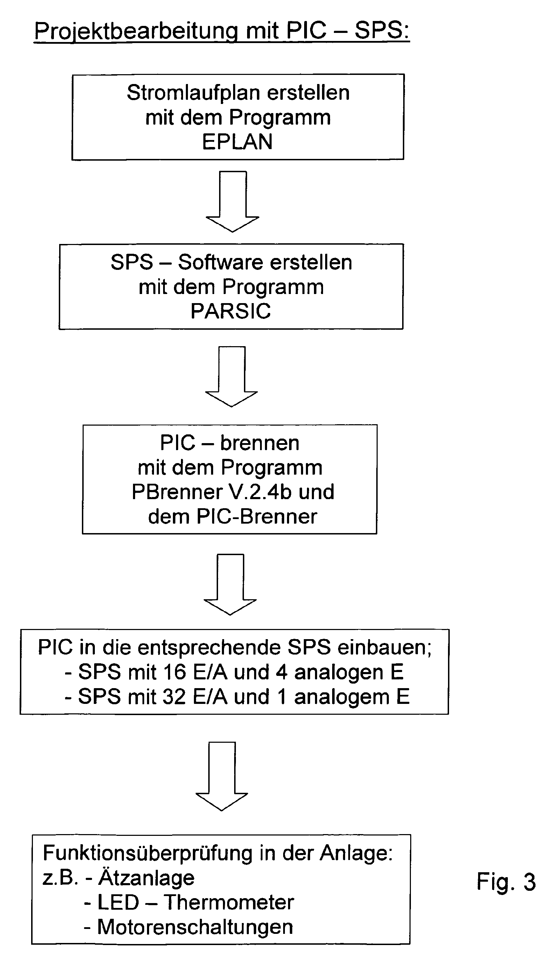

Figur 3 zeigt den Ablauf des Programmierens/Umprogrammierens der SPS: Es wird zunächst der Stromlaufplan der Maschinensteuerung erstellt, hier mit dem Programm EPLAN. Auf dem Bildschirm wird die logische Verknüpfung der notwendigen Baugruppen dargestellt und damit das speicherprogrammierbare Programm mit PARSIC kreiert, das letztlich nach Aufbau und Test dem PIC-Microcontroller im Brenner eingeprägt/-gebrannt wird. Der neu gebrannte PIC-Microcontroller wird in die entsprechende SPS in den auf der Leiterplatine dafür vorgesehenen Sockel gesteckt. Diese neue/modifizierte SPS wird schließlich auf ihre Funktion hin geprüft, angedeutet ist beispielsweise für eine Ätzanlage oder ein LED-Thermometer oder die schon dargestellte Motorenumschaltung.

## Patentansprüche

1. Speicherprogrammierbare Steuerung, SPS, bestehend aus:
- einer für die SPS vorbereiteten Leiterplatine,
- einem Microcontroller mit Stromversorgung,
- einer Eingangsbeschaltung,
- einer Ausgangsbeschaltung,
- mindestens einem Analogeingang,
- digitalen Anschlüssen,
- einem Taktgeber vorgegebener Taktfrequenz,
- einer Spannungsversorgung mit Spannungsregler,
**dadurch gekennzeichnet, dass** in den auf einen auf der Platine vorgesehenen Sockel steckbaren Microcontroller bei Bedarf ein neues Programm einbrennbar ist,
die digitalen Anschlüsse der SPS bei Bedarf in ihrer Anzahl als Eingänge über mindestens ein auf mindestens einen dafür auf der Platine vorhandnen Sockel aufsteckbares Widerstandsnetzwerk festlegbar sind,
die digitalen Anschlüsse der SPS bei Bedarf in ihrer Anzahl als Ausgänge über mindestens eine auf mindestens einem auf der Platine vorhandnen Sockel aufsteckbare Treiberstufe festlegbar sind,
die digitalen Anschlüsse bei Bedarf entweder wahlweise einzeln als Eingangs- oder Ausgangsanschluss oder in einem 2n- oder 2ⁿ-Raster als Eingangs- oder Ausgangsanschluss festlegbar sind,
wobei n nach Bedarf 1, 2, 3, ... ist,
die Versorgungsspannung der SPS zwischen 2,4 V und 35 V frei wählbar ist, und zwar
zwischen 2,4 V und 6 V bei Batterie-/Solarbetrieb und durch Überbrücken des Spannungsreglers oder
zwischen 6 V und 35 V bei einem spannungsentsprechenden Steckernetzteil und betriebswirksamem Spannungsregler.

2. SPS nach Anspruch 1, **dadurch gekennzeichnet, dass** der in der SPS verwendete Mikrocontroller eine graphische Programmieroberfläche hat.

3. SPS nach Anspruch 2. **dadurch gekennzeichnet, dass** der Microcontroller eine 13 V-Programmierspannung hat.

4. SPS nach Anspruch 1, **dadurch gekennzeichnet, dass** der in der SPS verwendete Mikrocontroller über eine Programmierhochsprache programmierbar ist.

5. SPS nach Anspruch 4, **dadurch gekennzeichnet, dass** Mikrocontroller eine 5 V-Programmierspannung hat.

6. SPS nach Anspruch 5, **dadurch gekennzeichnet, dass** die SPS einen 5 V-Brenner integriert hat.

7. SPS nach den Ansprüchen 3 und 6, **dadurch gekennzeichnet, dass** an die SPS ein 5 V-LED-Display mit bis zu 4 Zeilen zum Darstellen von bis zu 20 Zeichen anschließbar ist.

8. SPS nach Anspruch 7, **dadurch gekennzeichnet, dass** die SPS als Bausatz vorliegt.
